# DEMANDE DE BREVET EUROPEEN

(11) **EP 2 540 435 A1**
(43) Date de publication de la demande: **02.01.2013**
(21) Numéro de dépôt: 11290307.5
(22) Date de dépôt: 01.07.2011
(51) Int. Cl.: B23K 26/42, B23K 26/26

(54) **Installation de confinement sécuritaire de radiation laser**

(71) Demandeur: Siemens Vai Metals Technologies SAS, 42403 Saint-Chamond (FR)
(72) Inventeur: Thomasson, Herve, 38200 Seyssuel (FR); Ruesch, Jérémie, 42800 St Martin La Plaine (FR); Dorey, Nicolas, 42000 Saint Etienne (FR)
(74) Mandataire: Fischer, Michael

(57) **Abrégé**

La présente invention décrit une installation de confinement sécuritaire de radiation laser comprenant :
- une enceinte de confinement (EN) sécuritaire présentant au moins deux ouvertures (01, 02) latéralement opposées au travers desquelles au moins une bande métallique (B) peut défiler,
- l'enceinte comprenant un premier et un second dispositifs de mors de serrage (M11, M12, M12s ; M21, M22, M22s) de bande disposés sur le chemin de défilement de la bande entre les deux ouvertures, en ce que les dits mors sont disposés transversalement sur au moins la largeur de la bande,
- une tête (TL) d'une installation de découpage ou soudage émettant un tir de radiation laser à confiner, le dit tir étant déplaçable transversalement entre un couple de mors (M11, M12) placés en vis-à-vis d'un côté d'une face de bande,
- en mise sous position serrée des mors sur la bande, l'accouplement des mors (M11, M12, M12s ; M21, M22, M22s) sur les faces de bande induit la constitution d'un écran physique (F1b) à la radiation laser empêchant la dite radiation de passer au travers des deux ouvertures de l'enceinte.

## Description

La présente invention concerne une installation de confinement sécuritaire de radiation laser selon le préambule de la revendication 1 ainsi que son utilisation dans le cadre de procédé de soudage et de découpage de matériau, particulièrement de bandes métalliques subissant des opérations sidérurgiques.

Dans le cadre d'applications sidérurgiques en ligne continue, des soudeuses de raboutage de bandes présentent plusieurs modes possibles et connus de soudage : étincelage, recouvrement, TIG, MIG et Laser. Pour les soudeuses dites soudeuses laser, le type de source employée principalement est une source C02. D'autres types de sources peuvent être également employés comme les sources dites « ASOLID » (aussi connu sous les types YAG, Disque ou fibre) possédant des longueurs d'onde autours de 1060nm et présentant de nombreux avantages dont entre autre une simplicité du trajet optique, un meilleur rendement, une grande qualité de faisceau. Ces sources peuvent aussi être utilisées selon le cas en tant que moyen de découpe d'une bande en défilement. Dans la suite du présent document, il ne sera pas fait de différenciation entre les applications de soudage et de découpe qui toutes deux nécessitent un confinement que se propose de résoudre l'invention. En effet, l'inconvénient de tel type de source laser provient du choix de la longueur d'onde du faisceau et des dangers inhérents, de sorte qu'un confinement doit être installé pour éviter tout accident sur autrui. Un tel confinement n'est toutefois pas sans problèmes ou est du moins lié à différents aspects :
- avec un confinement trop exigu (par exemple encapsulant la zone de soudage), il existe une difficulté de visualiser par l'opérateur la zone des opérations dans la machine (découpe et soudage) ;
- les bandes (provenant de la soudeuse ou allant vers la soudeuse par défilement, depuis ou vers une ligne de traitement adjacente, bobineuse, etc.) doivent pouvoir entrer et sortir de la soudeuse sans plus de difficulté que sur des machines classiques. Sachant que les bandes en défilement sont très longues (plusieurs centaines de mètres), un confinement intégral physique est impossible autour d'une bande à découper ou de bandes à souder. Ainsi, le confinement ne peut comprendre qu'une enceinte encapsulant la soudeuse/découpeuse présentant des ouvertures d'entrée et de sortie de bande, donc des possibilités de fuite de radiation laser au travers de ces ouvertures.
- l'accès à la machine pour réglage et maintenance de celle-ci doit être le plus simple possible.

Un but de la présente invention est de proposer une installation de confinement sécuritaire laser d'un dispositif de découpage ou/et de soudage laser d'une bande parvenant ou sortant dudit dispositif par défilement.

Une telle installation est ainsi proposée au travers de la revendication 1. Des utilisations de cette installation sont complémentairement proposées dans le cadre du découpage ou/et du soudage de bandes métalliques parvenant ou sortant de la dite installation, elle-même disposée dans une ligne à défilement de ladite bande.

Il s'agit d'une installation de confinement sécuritaire de radiation laser comprenant :
- une enceinte de confinement sécuritaire présentant au moins deux ouvertures latéralement opposées au travers desquelles au moins une bande métallique peut défiler,
- l'enceinte comprenant un premier et un second dispositifs de mors de serrage de bande disposés sur le chemin de défilement de la bande entre les deux ouvertures, en ce que les dits mors sont disposés transversalement sur au moins la largeur de la bande,
- une tête d'une installation de découpage ou soudage émettant un tir de radiation laser à confiner, le dit tir étant déplaçable transversalement entre un couple de mors placés en vis-à-vis d'un côté d'une face de bande,
- en mise sous position serrée des mors sur la bande, l'accouplement des mors sur les faces de bande induit la constitution d'un écran physique à la radiation laser empêchant la dite radiation de passer au travers des deux ouvertures de l'enceinte.

La dite enceinte présente un premier avantage d'être dimensionnée afin de recouvrir les équipements suivants : tête de tir laser, mors de serrage et leur châssis. De la sorte, l'enceinte a une taille assimilable à un local dans lequel un opérateur peut pénétrer au moyen d'une simple porte située sur une paroi de la dite enceinte. Egalement, il est aussi possible de disposer sur les parois de l'enceinte ou bien sur une porte au moins un hublot permettant une visualisation du dispositif de soudage/découpage, les dits hublots étant prévus pour filtrer toute radiation laser selon les normes sécuritaires applicables. Enfin, l'enceinte peut comprendre un toit amovible permettant lors de l'arrêt du dispositif de soudage/découpage des opérations de maintenance à caractère lourd (par exemple, retirer le dit toit et déplacer une unité de mors de serrage via un unique pont roulant ou autre moyen de grutage. Par ailleurs, il est alors aussi possible de placer des pupitres de commande du dispositif de soudage/découpage hors de l'enceinte et, excepté le hublot, des moyens de vision et de contrôle peuvent être installés dans l'enceinte commandés depuis l'extérieur. Par ces dispositions, un opérateur peut ainsi aisément visualiser la zone des opérations de soudage/découpage dans l'enceinte, peut aussi pénétrer dans l'enceinte (laser éteint) et y effectuer des maintenances légères et même plus lourdes sans complexité et exigüité.

Un second avantage de l'installation selon l'invention provient du fait que l'enceinte est mise en place telle une cabine recouvrant le dispositif de soudage/découpage de bande et ne présentant principalement que deux ouvertures pour l'entrée et la sortie d'au moins une bande dans ou hors de ladite cabine. Sachant que l'accouplement des mors obstrue une sortie de radiation laser via les deux ouvertures, le confinement est rendu sécuritaire de manière simple et efficace sans devoir nécessairement ajouter de portes à la dite cabine de confinement. La cabine de confinement est aussi universellement installable, et ceci simplement autour de dispositifs existants de soudeuse ou découpeuse pour lesquels il est possible d'y implanter un laser à source « asolid » ou d'un autre type. Lors d'une telle installation, il sera prévu que les ouvertures de la cabine soient disposées et dimensionnées pour être mises sous écran de radiation en position serrée de chaque couple de mors attenant à chacune des ouvertures. Plus généralement, la géométrie des couples de mors serrant la bande devrait assurer au plus simple l'écran. Des dispositions complémentaires selon l'invention sont présentées au travers de sous revendications également liées à des avantages.

Des exemples de réalisation et d'application sont fournis à l'aide de figures décrites :
- Figure 1: Installation de confinement sécuritaire de radiation laser selon l'invention,
- Figure 2: Ecran asservissement mécaniquement,
- Figure 3: Ecran intégré au mors par mise en ondulation,
- Figure 4: Ecran de déviation partiellement asservi au mors,
- Figure 5: Ecran de déviation par décalage de ligne de passe.

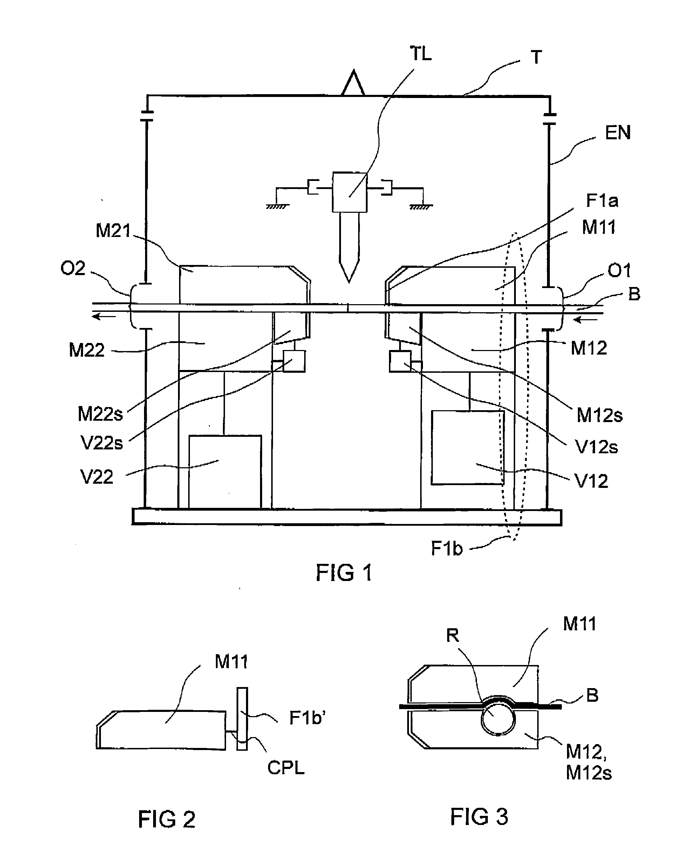

Figure 1 présente un mode de réalisation de l'installation de confinement sécuritaire de radiation laser selon l'invention comprenant .
- une enceinte (EN) de confinement sécuritaire présentant au moins deux ouvertures (01, 02) latéralement opposées au travers desquelles au moins une bande métallique (B) peut défiler, ici principalement horizontalement,
- l'enceinte comprenant un premier et un second dispositifs de mors de serrage (M11, M12, M12s ; M21, M22, M22s) de bande disposés sur le chemin de défilement de la bande entre les deux ouvertures, en ce que les dits mors sont disposés transversalement sur au moins la largeur de la bande,
- une tête de tir (TL) d'une installation de découpage ou soudage de bande(s) émettant un tir vertical de radiation laser à confiner, le dit tir étant déplaçable transversalement entre un couple de mors (M11, M21) placés en vis-à-vis d'un côté d'une face de bande (ici les mors dits supérieurs au dessus de la bande),
- en mise sous position serrée des mors sur chaque faces de la bande, l'accouplement des mors sur les faces de bande induit la constitution d'un écran physique (F1b) à la radiation laser empêchant la dite radiation de passer au travers des deux ouvertures de l'enceinte. La figure 1 présente clairement que l'écran (F1b) est formé par une section de faces arrières des mors (M11, M12 ; M21, M22) ayant une dimension assez étendue pour ombrager chaque ouverture de la radiation. Ici, la mention « arrière » pour les faces des mors (M11, M12 ; M21, M22) signifie au plus proche des ouvertures (01, 02).

Principalement, les mors supérieurs à la bande (M11, M21) peuvent être fixes ou ajustables en hauteur par rapport à la bande, et les mors inférieurs à la bande (M12, M22) sont écartables verticalement de la bande au moyen de vérins (V12, V22) placés sur un châssis couvert par l'enceinte (EN). Les deux mors de serrage inférieurs à la bande (M12s, M22s) sont des mors segmentés transversalement à la largeur de la bande (c'est-à-dire transversalement au défilement de bande) et permettent un serrage plus robuste et précis grâce à des moyens de blocage/serrage (V12s, V22s) indépendamment distribués sur chaque segment.

Ainsi, schématiquement l'enceinte de confinement (EN) recouvre la tête de tir et les deux colonnes de mors de serrage, chacune des colonnes comprenant respectivement un mors de serrage supérieur à la bande, un mors de serrage inférieur à la bande et une série de mors de serrage segmentés inférieurs à la bande. En règle générale, au moins une des deux colonnes est aussi mobile latéralement et l'installation selon l'invention prévoit que dans au moins dans une position de la colonne mobile la plus écartée d'une ouverture adjacente de l'enceinte, l'écran formé par l'accouplement des mors est assuré pour empêcher toute radiation laser de passer au travers de ladite ouverture.

Le dit écran est complémentairement formé par un revêtement absorbant (F1a) de radiation des faces de mors (M11, M12s ; M21, M22s) latérales à la tête de tir. De tels revêtement sont aussi prévus sur les parois internes de l'enceinte pour empêcher toute réflexion parasite de radiation issus de la tête de tir ou de surfaces réfléchissantes comme inévitablement celle de la bande sous la tête de tir.

Comme déjà mentionné précédemment, la figure 1 permet une représentation du toit amovible (T) de l'enceinte (EN), formant ainsi au moins une troisième ouverture supérieure obturable de l'enceinte. Même si non représentées, au moins une porte et un hublot sont aussi prévus dans au moins une des parois sans les ouvertures (01, 02), c'est-à-dire parallèle au sens de défilement de la bande. Des moyens de contrôle sont disposés dans l'enceinte pour s'assurer de la fermeture des portes, toit, etc. avant toute activation de la radiation.

La radiation laser est émise par une unité à laser de longueur d'onde située dans le proche infrarouge autour de 1000nm, idéalement dans un intervalle adapté aux applications laser de type fibre/disc autour de 1060nm jusqu'à une application laser de type diode autour de 870nm. Ainsi, l'installation de confinement selon l'invention est adaptée à divers niveaux d'exigences sécuritaires concernant les lasers requis pour différentes utilisations (soudage ou/et découpage laser) et les formats/matériaux de bande.

A cet effet, de multiples utilisations de l'installation de confinement sont possibles.

Une utilisation de l'installation de confinement laser selon l'invention est de prévoir que la tête de tir est une découpeuse laser de bande.

Une utilisation alternative ou complémentaire de l'installation de confinement laser selon l'invention est de prévoir que la tête de tir (ou une deuxième tête de tir) est une soudeuse laser d'une queue de première bande et d'une tête d'une deuxième bande. Dans ce cas, la queue d'une des bandes est amenée et maintenue dans un premier mors de serrage (= première colonne de mors de serrage) et la tête de la deuxième bande étant amenée et maintenue dans un deuxième mors de serrage (= seconde colonne de mors de serrage) faisant face au premier mors de serrage, et lorsque les deux bandes sont maintenues dans les mors en position serrée, une activation de radiation est permise. Enfin, une telle utilisation prévoit que .
- avant l'amenée de la queue de première bande au travers du premier puis du deuxième mors de serrage, les deux mors de serrage sont placées en position desserrée et actionne simultanément un écartement mécanique suffisant pour le passage de la première bande au travers d'une ouverture de sortie et d'une ouverture d'entrée d'une enceinte de confinement laser enfermant au moins les mors et la tête de soudeuse, cette étape interdisant une activation de radiation,
- au plus tard en fin d'amenée en position de maintien de la tête de la deuxième bande dans le deuxième mors, les deux mors sont replacées en position serrée, et induisent ainsi l'écran contre un passage de radiation laser hors de l'enceinte afin de permettre une activation de radiation.

La figure 2 présente, sur la base de la figure 1, un mode de réalisation de l'écran souhaité par asservissement mécanique aux mors. L'exemple est donné sur un des mors supérieurs (M11) mais pourrait être donné sur tout autre mors (M12, M21, M22...). L'écran ainsi est formé par une ou des parois (F1b') asservies mécaniquement au serrage du ou des mors (par exemple M11 avec M12) au moyen d'un couplage mécanique (CPL). Ce système est particulièrement effectif si l'accouplement géométrique intrinsèque des mors ne constitue pas un écran sécuritairement suffisant contre des radiations pouvant sortir par les ouvertures. Une telle paroi peut aussi être une porte venant obturer localement l'ouverture jusqu'à demi-hauteur d'une face de bande.

Alternativement ou complémentairement aux figures 1 et 2, l'écran peut aussi être formé par un réseau obturateur de type labyrinthe entre les mors et chacune des ouvertures. La disposition de ce type de réseau est telle que si les mors sont accouplés, le dit réseau obture des chemins possibles restants de radiations vers les ouvertures (01, 02).

L'installation selon l'invention prévoit aussi que l'écran peut être formé par une distribution transversale segmentée en une pluralité de mors (dits précédemment « segmentés » (M12s, M22s) dont les segments de mors hors d'une zone de serrage de bande et latéraux à la dite bande sont accolables. Cet effet d'écran « à largeur variable » aux bords de bande est particulièrement appréciable pour des dispositifs de soudage/découpage adaptés à des bandes de format et donc de largeur fort variables. Suivant le nombre de segments prévus, il est possible qu'au moins un des mors segmentés au bord de bande laisse apparaître un interstice perméable aux radiations si le tête de tir s'en approche et l'écran peut ainsi prévoir d'être formé par des parois amovibles latérales à la bande qui sont amenées en bord de bande en position serrée de mors (par ailleurs, cette option d'écran latéraux amovibles est aussi adaptés pour des mors de serrage supérieurs et inférieurs à la bande et non segmentés).

La figure 3 présente un écran intégré dans deux mors par mise en ondulation de la bande au moyen d'un rouleau (R) dont la longueur est supérieure à celle des mors supérieurs et inférieurs (M11, M12 ou M21, M22) (les mors inférieurs M12, M22 pouvant être complémentairement segmentés ou non) en position serrée sur la bande. Le rouleau est principalement disposé transversalement au défilement dans un des deux mors et une partie de sa section cylindrique tourne dans un évidement de l'autre mors. Une radiation provenant du côté de la tête de tir entre les deux mors serrés et hors de présence de bande (aux bords de la bande) est ainsi arrêtée par la présence du rouleau faisant écran à l'ouverture en face arrière de mors. Ce mode de réalisation d'écran permet de complètement bloquer une radiation résiduelle se propageant entre les mors de serrage, et ceci avantageusement quelle que soit la largeur de la bande du moment que la longueur du rouleau est plus grande que celle de la largeur de bande ou ouverture.

Outre cette dernière possibilité au moyen d'un évidement cylindrique réparti sur deux surfaces de serrage de mors et plus généralement, l'écran peut ainsi être formé par une déviation de bande dans ou entre les mors et chacune des ouvertures, idéalement par une mise en ondulation ou un guidage en chicane de ladite bande.

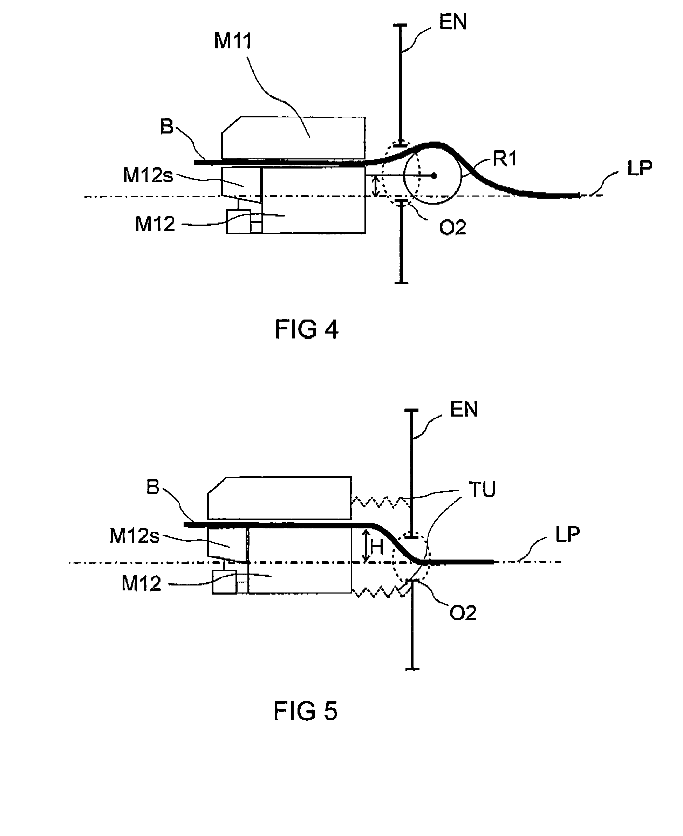

Figure 4 présente une alternative ou un complément d'écran de déviation ou mise en ondulation, ici également partiellement asservi au mors inférieur de serrage (M12, M12s), en ce que la mise en ondulation est produite au moyen d'un élément de déviation transversal au défilement de bande tel qu'un rouleau (R1), le dit rouleau pouvant être couplé à l'arrière d'au moins un mors mobile d'un couple de mors et même disposé hors de l'enceinte de sorte que la bande entrant ou sortant par une des ouvertures y entre ou y sorte sous un inclinaison bloquant un passage de radiations de l'intérieur vers l'extérieur de l'enceinte. Dans l'exemple selon la figure 4 et d'un côté de l'enceinte avec une ouverture par exemple pour l'entrée de bande, la bande arrive au travers de l'enceinte sous une ligne de passe (LP) disposée entre le couple de mors supérieurs et inférieurs (M11 ; M12, M12s) en position écartée et l'élément (R1) - un rouleau - couplé mécaniquement par exemple au mors inférieur (M12) s'élève en hauteur lorsque le dit mors se rapproche du mors supérieur.

En position accouplée de serrage de bande, le rouleau (R1) a créé une mise en ondulation de la bande formant ainsi un écran par l'inclinaison de bande dans l'ouverture. Les dimensions de l'élément (ou diamètre dudit rouleau) peuvent être choisis pour dépasser les dimensions d'ouverture de l'enceinte et apporter un confinement sécuritaire accru.

Figure 5 présente une alternative ou un complément d'écran de déviation par décalage de ligne de passe, ici pour exemple partiellement asservi au mors inférieur de serrage (M12, M12s), en ce qu'une déviation de la bande est produite par un déplacement (H) d'au moins un des mors hors d'une ligne de passe médiane de défilement (voir la ligne plane hachurée hors de l'enceinte), ici lors de la montée en serrage du mors inférieur (M12, M12s). La surface arrière des mors de chaque colonne de mors est ainsi plus centrée et donc plus couvrante sur une ouverture d'enceinte et la déviation contribue à accentuer additionnellement cet écran dans chaque ouverture respective.

Enfin, l'installation selon l'invention et selon toutes les figures précédentes peut aussi comprendre un moyen sécuritaire de parois en tunnel (TU) (ou autre type de manchon) reliant les faces arrières des colonnes de mors et le périmètre des ouvertures y faisant face. Au moins une paroi du tunnel est mobile ou déformable afin de permettre de suivre des mouvements (latéraux, verticaux) potentiels de mors. Plus généralement, ledit tunnel peut ainsi être à géométrie variable. En position d'accouplement des mors, un écran est formé au moyen du tunnel autour de la bande entre les mors et chaque ouverture, ledit tunnel absorbant ou du moins interdisant à toute radiation parasite résiduelle de sortir de l'enceinte, via tout espace libre entre chaque colonne de mors et l'ouverture d'enceinte adjacente.

## Revendications

1. Installation de confinement sécuritaire de radiation laser comprenant .
- une enceinte de confinement (EN) sécuritaire présentant au moins deux ouvertures (01, 02) latéralement opposées au travers desquelles au moins une bande métallique (B) peut défiler,
- l'enceinte comprenant un premier et un second dispositifs de mors de serrage (M11, M12, M12s ; M21, M22, M22s) de bande disposés sur le chemin de défilement de la bande entre les deux ouvertures, en ce que les dits mors sont disposés transversalement sur au moins la largeur de la bande,
- une tête (TL) d'une installation de découpage ou soudage émettant un tir de radiation laser à confiner, le dit tir étant déplaçable transversalement entre un couple de mors (M11, M12) placés en vis-à-vis d'un côté d'une face de bande,
- en mise sous position serrée des mors sur la bande, l'accouplement des mors (M11, M12, M12s ; M21, M22, M22s) sur les faces de bande induit la constitution d'un écran physique (F1b) à la radiation laser empêchant la dite radiation de passer au travers des deux ouvertures de l'enceinte.

2. Installation selon revendication 1, pour laquelle l'écran est formé par un revêtement absorbant (F1a) de radiation des faces de mors latérales à la tête de tir.

3. Installation selon revendication 1 ou 2, pour laquelle l'écran (F1b) est formé par une section de faces arrières des mors ayant une dimension assez étendue pour ombrager chaque ouverture de la radiation.

4. Installation selon revendication 1 ou 2, pour laquelle l'écran est formé par des parois (F1b') asservies mécaniquement au serrage des mors.

5. Installation selon une des revendications précédentes, pour laquelle l'écran est formé par une déviation de bande entre les mors et chacune des ouvertures, idéalement par une mise en ondulation ou un guidage en chicane de ladite bande.

6. Installation selon revendication 5, pour laquelle la déviation de la bande est produite par un déplacement d'au moins un des mors hors d'une ligne de passe médiane de défilement.

7. Installation selon revendication 5 ou 6, pour laquelle la mise en ondulation est produite au moyen d'un élément transversal au défilement de bande, le dit élément pouvant être disposé à l'arrière d'un couple de mors ou, dans le cas où l'élément est un rouleau, dans un évidement cylindrique réparti sur deux surfaces de serrage de mors.

8. Installation selon une des revendications précédentes, pour laquelle l'écran est formé par un réseau obturateur de type labyrinthe entre les mors et chacune des ouvertures.

9. Installation selon une des revendications précédentes, pour laquelle l'écran est formé par une distribution transversale segmentée en une pluralité de mors dont les segments de mors hors d'une zone de serrage de bande et latéraux à la dite bande sont accolables.

10. Installation selon une des revendications précédentes, pour laquelle l'écran est formé par des parois amovibles latérales à la bande qui sont amenées en bord de bande en position serrée de mors.

11. Installation selon une des revendications précédentes, pour laquelle l'écran est formé au moyen d'un tunnel ou manchon autour de la bande entre les mors et chaque ouverture, ledit tunnel étant à géométrie variable.

12. Installation selon une des revendications précédentes, pour laquelle la radiation laser est émise par une unité à laser de longueur d'onde située dans le proche infrarouge autour de 1000nm, idéalement dans un intervalle adapté au application laser de type fibre/disc autour de 1060nm jusqu'à une application laser de type diode autour de 870nm.

13. Installation selon une des revendications précédentes, pour laquelle l'enceinte comprend au moins une troisième ouverture supérieure obturable par un toit amovible.

14. Utilisation de l'installation selon une des revendications précédentes pour laquelle la tête de tir est une découpeuse laser de bande.

15. Utilisation de l'installation selon une des revendications précédentes ou de revendication 14 pour laquelle la tête de tir est une soudeuse laser d'une queue de première bande et d'une tête d'une deuxième bande.

16. Utilisation selon la revendication 15, pour laquelle la queue d'une des bandes est amenée et maintenue dans un premier mors de serrage et la tête de la deuxième bande étant amenée et maintenue dans un deuxième mors de serrage faisant face au premier mors de serrage, et lorsque les deux bandes sont maintenues dans les mors en position serrée, une activation de radiation est permise.

17. Utilisation selon la revendication 16, pour laquelle .
- avant l'amenée de la queue de première bande au travers du premier puis du deuxième mors de serrage, les deux mors de serrage sont placées en position desserrée et actionne simultanément un écartement mécanique suffisant pour le passage de la première bande au travers d'une ouverture de sortie et d'une ouverture d'entrée d'une enceinte de confinement laser enfermant au moins les mors et la tête de soudeuse, cette étape interdisant une activation de radiation,
- au plus tard en fin d'amenée en position de maintien de la tête de la deuxième bande dans le deuxième mors, les deux mors sont replacées en position serrée, et induisent un écran contre un passage de radiation laser hors de l'enceinte afin de permettre une activation de radiation.
